# FASCICULE DE BREVET EUROPEEN

(11) **EP 2 963 335 B1**
(45) Date de publication et mention de la délivrance du brevet: **30.01.2019**
(21) Numéro de dépôt: 15173295.5
(22) Date de dépôt: 23.06.2015
(51) Int. Cl.: B60Q 1/076, F21S 41/147, F21S 45/47, F21S 45/49

(54) **MONTAGE PIVOTANT D'UN MODULE D'ECLAIRAGE POUR VEHICULE AUTOMOBILE**
SCHWENKBARE MONTAGE EINES BELEUCHTUNGSMODULS FÜR KRAFTFAHRZEUG
PIVOTAL MOUNTING OF A MOTOR VEHICLE LIGHTING MODULE

(30) Priorité: 30.06.2014 FR 1456199
(43) Date de publication de la demande: 06.01.2016
(73) Titulaire: VALEO VISION, 93012 Bobigny Cedex (FR)
(72) Inventeur: MADELAINE, Mehdi, 49630 Maze (FR); CHATEL, Eric, 49460 Montreuil Juigne (FR)

(56) Documents cités:
- EP-A1- 1 770 328
- EP-A1- 2 020 336
- EP-A1- 2 578 451
- EP-A2- 2 740 991
- WO-A1-2012/098142
- DE-A1-102008 061 526
- DE-A1-102010 060 642
- FR-A1- 2 920 516
- JP-A- 2008 047 385
- US-A1- 2008 144 329
- US-A1- 2012 007 506
- US-A1- 2014 112 011

## Description

L'invention a trait au domaine de l'éclairage et/ou de la signalisation lumineuse, notamment pour véhicule automobile. Plus particulièrement, l'invention a trait à un dispositif d'éclairage et/ou de signalisation lumineuse avec au moins un module d'éclairage et/ou de signalisation dont la position est apte à être réglée par rapport à un support du dispositif.

Le document de brevet publié US 7,618,174 B2 divulgue un projecteur de véhicule automobile, comprenant trois modules d'éclairage montés pivotant verticalement sur un support commun. Ces mouvements de pivotement sont coordonnés et commandés par un moteur électrique asservi notamment à l'angle de braquage du volant du véhicule en vue d'assurer une fonction d'éclairage directionnel, communément désignée par l'acronyme DBL signifiant « dynamic bending light ». La source lumineuse de chacun des modules, et son radiateur, sont fixes par rapport au support alors que la partie optique, quant à elle, est mobile en pivotement. Cette construction est intéressante en ce qu'elle permet de prévoir les radiateurs des sources lumineuses, notamment du type diode à électroluminescence, en dehors du boîtier du dispositif, favorisant ainsi le refroidissement des sources lumineuses. Elle présente toutefois l'inconvénient qu'un jeu de fonctionnement doit être prévu entre les réflecteurs et les sources lumineuses correspondantes. Ce jeu peut présenter certaines difficultés comme notamment des pertes de lumières. De plus, les faisceaux d'éclairage des modules ne peuvent être réglés verticalement l'un par rapport à l'autre.

Le document de brevet publié US 8,585,265 B2 divulgue un projecteur de véhicule automobile comprenant au moins un module d'éclairage dont le faisceau est réglable verticalement et horizontalement. La source lumineuse, le radiateur de refroidissement de la source en question et un réflecteur coopérant avec la source sont montés fixes sur un support. Une lentille apte à dévier les rayons lumineux émis par la source et réfléchis par le réflecteur est montée pivotante suivant un axe vertical et suivant un axe horizontal. Ce montage est réalisé de manière à ce que le foyer de la lentille reste confondu avec un foyer correspondant de l'ensemble réflecteur-source lumineuse. Cette construction est intéressante en ce qu'elle permet, tout comme dans l'enseignement du document précédent, d'assurer un refroidissement optimal de la ou des sources lumineuses. Elle permet également de pallier le problème du déplacement du réflecteur par rapport aux sources lumineuses, présent dans l'enseignement du document précédent. Elle présente toutefois l'inconvénient d'imposer certaines contraintes au niveau de l'architecture du projecteur. En effet, les radiateurs doivent nécessairement être situés à l'arrière et le module, pour pouvoir mettre en oeuvre l'enseignement de ce document, doit comprendre une lentille. De plus, la construction de cet enseignement est assez complexe et potentiellement coûteuse. Le document US2008144329 montre également un dispositif d'éclairage pour véhicules comprenant trois modules lumineux avec un dissipateur thermique commun et un support, les modules étant monté pivotant par rapport au support via le dissipateur thermique. L'invention a pour objectif de pallier au moins un des inconvénients de l'art antérieur, plus particulièrement de l'art antérieur susmentionné. Plus particulièrement, l'invention a pour objectif de proposer un dispositif d'éclairage et/ou de signalisation pourvu d'un module pivotant dont le montage est plus simple et/ou plus économique.
L'invention a pour objet un dispositif d'éclairage et/ou de signalisation lumineuse pour véhicule automobile, comprenant: au moins un module lumineux apte à émettre un faisceau lumineux et comprenant un dissipateur thermique ; et un support ; remarquable en ce que le ou chacun des modules est monté pivotant sur le support via son dissipateur thermique.
Selon un mode avantageux de l'invention, le ou chacun des modules présente un axe optique et est pivotant suivant un axe transversal, préférentiellement perpendiculaire, à l'axe optique dudit module.

Selon l'invention, le support comprend un berceau sur lequel le dissipateur thermique du ou de chacun des modules est monté pivotant, ledit berceau étant préférentiellement en matériau isolant électriquement. Le berceau peut être en matériau plastique, notamment thermoplastique.

Selon l'invention, le berceau forme deux bras s'étendant latéralement de part et d'autre du dissipateur thermique.

Selon l'invention, le dissipateur thermique du ou de chacun des modules comprend, de chaque côté, latéralement, un tourillon coopérant avec un des bras.

Selon l'invention, au moins l'un, notamment chacun, des deux bras comprend des surfaces de guidage du tourillon correspondant du dissipateur thermique pour la mise en place du ou de chacun des modules par rapport au berceau préférentiellement par clippage.
Selon un mode avantageux de l'invention, les surfaces de guidage convergent vers un logement final du tourillon, préférentiellement suivant une direction longitudinale.
Selon un mode avantageux de l'invention, les surfaces de guidage sont configurées pour déformer élastiquement au moins une partie des bras dans une direction transversale opposée au module lors de la mise en place du module, lesdites parties des bras décrivant un mouvement inverse lorsque le module atteint une position finale.

Selon l'invention, le ou chacun des modules comprend des moyens de retenue latérale des bras par rapport audit module

Selon l'invention, le ou chacun des modules comprend un masque comprenant les moyens de retenue latérale, lesdits moyens formant des surfaces de retenue des bras sur ledit masque. Le masque peut être apte à être mis en place sur le module après la mise en place du module sur le berceau.
Selon un mode avantageux de l'invention, le masque comporte une portion esthétique destinée au moins au masquage du dissipateur thermique, les moyens de retenue latérale s'étendant de part et d'autre du masque depuis la portion esthétique parallèlement aux bras du berceau.
Selon un mode avantageux de l'invention, chaque moyen de retenue latérale s'étend de manière à recouvrir le bras que ce moyen est destiné à retenir.
Selon un mode avantageux de l'invention, les moyens de retenue latérale sont en forme de patte.
Selon un mode avantageux de l'invention, le berceau comprend une base reliant les deux bras, ladite base comprenant des moyens de positionnement et de fixation sur une platine, préférentiellement métallique, du support.
Selon un mode avantageux de l'invention, le dissipateur thermique forme la partie basse du ou de chacun des modules, ledit dissipateur s'étendant préférentiellement longitudinalement sur plus de 50%, plus préférentiellement sur plus de 70%, de la longueur du module.

Selon un mode avantageux de l'invention, le dispositif comprend un ou plusieurs patins disposés entre une face inférieure du dissipateur thermique du module, ou de chacun des modules, et la platine, ledit ou lesdits patins étant configurés pour amortir des mouvements de vibrations dudit module par rapport à la platine.

Selon un mode avantageux de l'invention, le ou chacun des modules comprend au moins une source lumineuse reliée thermiquement au dissipateur thermique dudit module. La ou les sources lumineuses peuvent être montées directement sur le dissipateur thermique, si bien que ce dernier peut être au potentiel électrique d'un des conducteurs d'alimentation desdites sources.

Selon un mode avantageux de l'invention, le ou chacun des modules comprenant une source lumineuse comprend des moyens optiques aptes à dévier les rayons lumineux de la ou des sources lumineuses en vue de former un faisceau lumineux suivant un axe optique du module.

Selon un mode avantageux de l'invention, le ou chacun des modules comprenant au moins une source lumineuse et des moyens optiques pour former un faisceau lumineux, la ou les sources lumineuses, le dissipateur thermique et les moyens optiques du ou de chacun des modules forment un ensemble rigide apte à pivoter par rapport au support.

Selon un mode avantageux de l'invention, les modules sont au moins au nombre de deux et sont des modules d'éclairage, un premier desdits modules étant monté de manière non pivotante sur le support, au moins un deuxième desdits modules étant monté pivotant. Le support peut être un support commun pour les modules. En d'autres termes, le support est une même pièce, par exemple formée en aluminium ou en magnésium. Cette caractéristique offre l'avantage de pouvoir réduire le poids du dispositif.

Selon un mode avantageux de l'invention, le premier module étant apte à produire un premier faisceau, notamment à coupure droite ou sans coupure, le deuxième module étant apte à produire un deuxième faisceau d'éclairage, notamment à coupure avec un ressaut, le dispositif est capable de produire une fonction d'éclairage, notamment de type route ou code, par superposition des premier et deuxième faisceaux.

Selon un mode avantageux de l'invention, le dispositif comporte en outre un module de réglage du deuxième module pour régler la direction d'émission du deuxième faisceau d'éclairage.

Les mesures de l'invention sont intéressantes en ce qu'elles permettent de réaliser un montage pivotant de manière simple et économique. En effet, elles permettent de faire pivoter la totalité du module, ce dernier pouvant rester monobloc. La construction du module reste simple et classique ; sa fiabilité en reste par conséquent maîtrisée. Le positionnement du radiateur en bas du module et s'étendant longitudinalement sur la majorité dudit module, permet d'abaisser le centre de gravité du module et, partant, sa stabilité. De plus, l'utilisation du berceau est particulièrement simple et économique. Le montage du module sur le berceau s'en voit également facilité.

D'autres caractéristiques et avantages de la présente invention seront mieux compris à l'aide de la description et des dessins parmi lesquels :
- La figure 1 est une vue d'ensemble d'un projecteur pour véhicule automobile, conforme à l'invention ;
- La figure 2 une vue de détail d'un module d'éclairage du projecteur de la figure 1 ;
- La figure 3 est une vue en perspective depuis un point de vue arrière et inférieur du module de la figure 2.

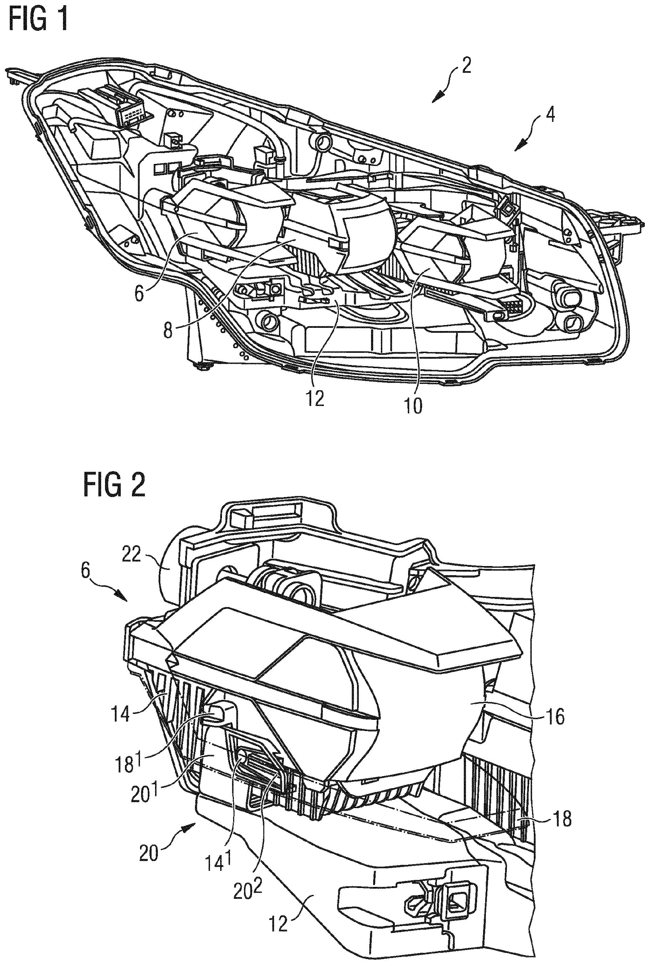

La figure 1 illustre un dispositif d'éclairage, plus précisément un projecteur de véhicule automobile. Le projecteur 2 est illustré en perspective depuis un point de vue avant droit. Il s'agit en l'occurrence d'un projecteur droit, ce dernier étant représenté sans la glace refermant le boîtier 4. Ce dernier loge trois modules d'éclairage, à savoir les modules 6, 8 et 10. Ces trois modules assurent les fonctions d'éclairage du type code et du type route. La fonction d'éclairage du type code correspond à un éclairage à coupure essentiellement horizontale, destiné au croisement avec d'autres véhicules alors que la fonction d'éclairage du type route ne présente pas de coupure et éclaire plus haut et donc plus loin, cette fonction étant réservée à des conditions de roulage sans croisement avec d'autres véhicules.

Parmi les trois modules 6, 8 et 10, un premier module peut produire un faisceau d'éclairage à coupure droite et horizontale, un deuxième module peut produire un faisceau d'éclairage à coupure horizontale avec un ressaut et le troisième module peut produire un faisceau d'éclairage sans coupure. La fonction d'éclairage du type code peut alors être assurée par les premier et deuxième modules combinés. Similairement, la fonction d'éclairage du type route peut être assurée par les premier et troisième modules combinés. Les fonctions d'éclairage sont ainsi réalisées par superposition de deux faisceaux.

Les trois modules 6, 8 et 10 sont montés sur un support 12 préférentiellement commun aux trois modules. Afin que la superposition des faisceaux des différents modules soit satisfaisante, il peut être nécessaire de réaliser un ajustement des faisceaux les uns par rapport aux autres, notamment verticalement. Pour ce faire, au moins un des modules, préférentiellement au moins deux des modules lorsqu'ils sont au nombre de trois, peuvent être montés pivotants suivant un axe généralement horizontal afin de pouvoir réaliser un ajustement du faisceau dans une direction verticale.

Le montage du module 6 sur son support 12 va être décrit en relation avec les figures 2 à 4, étant entendu que ce montage est également applicable à chacun des autres modules.

La figure 2 est une vue de détail du module d'éclairage 6. Il comprend un radiateur, ou dissipateur thermique, 14 supportant une ou plusieurs sources lumineuses (non visibles). Il comprend également des moyens optiques aptes à réfléchir et/ou dévier les rayons produits par la ou les sources lumineuses en vue de former un faisceau d'éclairage. Les moyens optiques peuvent comprendre un réflecteur (non visible) ainsi qu'une lentille 16. Ces différents composants sont bien connus en soi de l'homme de métier. Ces différents composants du module forment un ensemble rigide monté pivotant sur le support 12 via le berceau 20.

Le radiateur 14 s'étend longitudinalement sous le module et comprend deux tourillons 14¹ coopérant par engagement rotatif avec des bras 20¹ du berceau 20. Ces bras 20¹ peuvent comprendre par ailleurs des surfaces de guidage 20² destinées à faciliter la mise en place du module 6, plus particulièrement des tourillons 14¹ du radiateur dans leurs logements respectifs dans lesdits bras. Les surfaces de guidage 20² sont en effet dirigées de manière à diverger vers l'avant du module et du projecteur, permettant ainsi au module 6 d'être mis en place par un mouvement majoritairement longitudinal dirigé vers l'arrière.

Le berceau 20 est préférentiellement en matériau isolant électriquement, comme notamment en matière plastique. Le radiateur 14 est en matériau conducteur thermiquement, notamment métallique, comme par exemple de l'aluminium. La ou les sources lumineuses sont préférentiellement du type diode à électroluminescence. De telles sources lumineuses requièrent une certaine puissance de refroidissement qui est assurée par le radiateur 14. Ces sources lumineuses peuvent ainsi être montées directement sur le radiateur afin de maximiser le transfert de chaleur. A cet effet, la ou les sources lumineuses peuvent être montées directement sur le radiateur, si bien que ce dernier peut être au potentiel électrique d'un des conducteurs d'alimentation desdites sources.

Il peut donc être nécessaire d'isoler électriquement le radiateur 14 du reste du projecteur, plus particulièrement du support 12. Ce dernier peut en effet être réalisé en métal, plus particulièrement en tôle métallique pour des raisons essentiellement de coût et de rigidité.

Le module 6 peut également comprendre une pièce 18 servant non seulement de cache mais également de retenue des bras 20¹ du berceau 20 via ses portions 18¹. En effet, lors de la mise en place du module 6 sur le support 12 via les surfaces de guidage 20², les bras 20¹ du berceau se déforment élastiquement de manière à s'écarter du radiateur, dans une direction essentiellement transversale, pour ensuite revenir à une position proche de la position initiale lorsque les tourillons sont en position d'engagement avec les logements correspondants dans lesdits bras 20¹. Afin d'éviter tout écartement intempestif des bras 20¹, la pièce 18 peut être mise en place sur le module après la mise en place du module 6 sur le berceau 20, ladite pièce comprenant latéralement de part et d'autre du radiateur 14 du module 6 une portion 18¹ formant une patte de retenue. Cette patte s'étend parallèlement à une portion supérieure d'un bras 20¹, et à l'extérieur de ladite portion. La pièce 18 est représentée en transparence à la figure 2.

Un dispositif de réglage 22 du module 6 par rapport au support 12 est prévu. Il peut être électrique ou mécanique. Il peut comprendre une pièce mobile reliée mécaniquement à une portion du module à distance de l'axe de pivotement réalisé par les tourillons 14¹ et le berceau 20. Cette liaison mécanique peut être une liaison à rotule. Le déplacement de la pièce mobile permet ainsi de modifier l'inclinaison du module par rapport à son axe de pivotement.

La plage de pivotement du module 6 est limitée, par exemple à moins de 20°, préférentiellement moins de 15°, plus préférentiellement moins de 10°. Des moyens d'amortissement du mouvement de pivotement peuvent être prévus entre le radiateur 14 et le support 12. Plus particulièrement, un ou plusieurs patins (non représentés) peuvent être prévus entre la face inférieure du radiateur et le support 12, ce ou ces patins étant en matériau déformable élastiquement avec une composante d'amortissement, comme par exemple en matériau élastomère et/ou fibreux.

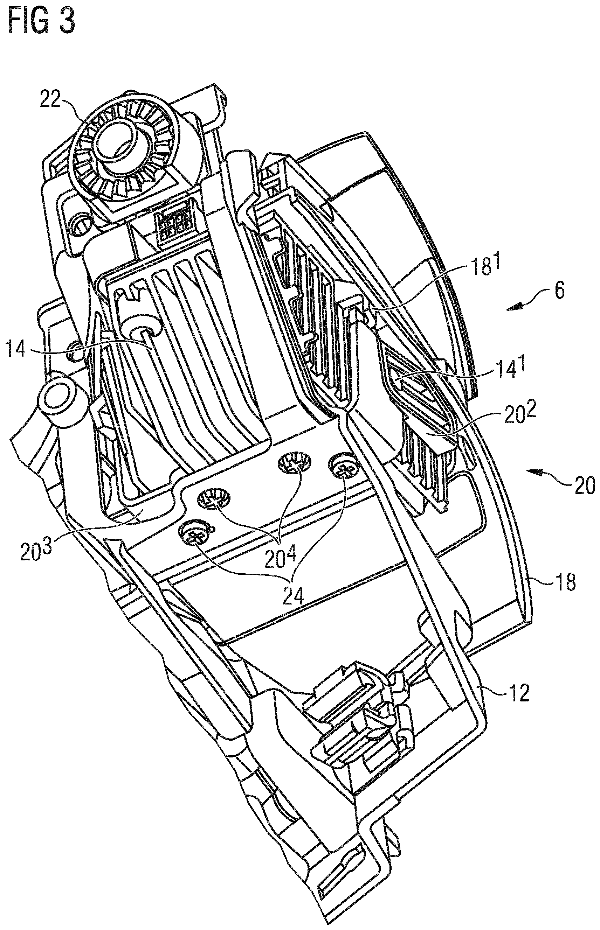

La figure 3 est une vue en perspective et de détail du module 6 depuis des points de vue situés à l'arrière et sous ledit module. On peut observer que le berceau 20 comprend une base 20³, ladite base 20³ et les bras 20¹ présentant un profil en forme de U apte à recevoir le module 6, plus précisément le radiateur 14 du module 6. La base 20³ peut comprendre des pions de centrage 20⁴ coopérant par engagement avec des orifices correspondant dans une platine du support 12. Similairement, des moyens de fixation comme des vis de fixation peuvent être mis en oeuvre en vue de fixer la base 20³ à la platine du support 12. Ces moyens de fixation coopèrent avec des orifices pratiqués dans la base 20³ du berceau 20 et dans la platine du support 12.

On peut observer à la figure 3 les portions 18¹ de la pièce 18. Ces portions forment plus précisément des encoches avec lesquelles des portions en saillie des bras 20¹ du berceau 20 coopèrent. Ces encoches sont ouvertes vers l'arrière du module de manière à permettre leur mise en place via la pièce 18 dans une direction longitudinale dirigée vers l'arrière.

## Revendications

1. Dispositif d'éclairage et/ou de signalisation lumineuse (2) pour véhicule automobile, comprenant :
- au moins un module lumineux apte à émettre un faisceau lumineux (6, 8, 10) et comprenant un dissipateur thermique (14); et
- un support (12, 20) ;
**caractérisé en ce que**
le ou chacun des modules (6) est monté pivotant sur le support (12, 20) via son dissipateur thermique (14),
**en ce que** le support comprend un berceau (20) sur lequel le dissipateur thermique (14) du ou de chacun des modules (6) est monté pivotant, ledit berceau étant préférentiellement en matériau isolant électriquement,
**en ce que** le berceau (20) forme deux bras (20¹) s'étendant latéralement de part et d'autre du radiateur (14),
**en ce que** le dissipateur thermique (14) du ou de chacun des modules (6) comprend, de chaque côté, latéralement, un tourillon (14¹) coopérant avec un des bras (20¹),
**en ce que** au moins l'un, notamment chacun, des deux bras (20¹) comprend des surfaces de guidage (20²) du tourillon (14¹) correspondant du dissipateur thermique (14) pour la mise en place du ou de chacun des modules (6) par rapport au berceau (20),
**en ce que** le ou chacun des modules (6) comprend des moyens de retenue latérale (18¹) des bras (20¹) par rapport audit module (6),
et **en ce que** le ou chacun des modules comprend un masque (18) comprenant les moyens de retenue latérale (181), lesdits moyens formant préférentiellement des surfaces de retenue des bras sur ledit masque (18).

2. Dispositif (2) selon la revendication 1, **caractérisé en ce que** le ou chacun des modules (6) présente un axe optique et est pivotant suivant un axe transversal, préférentiellement perpendiculaire, à l'axe optique dudit module.

3. Dispositif selon l'une des revendications 1 ou 2, **caractérisé en ce que** le masque comporte une portion esthétique destinée au moins au masquage du dissipateur thermique, les moyens de retenue latérale (18¹) s'étendant de part et d'autre du masque depuis la portion esthétique parallèlement aux bras du berceau.

4. Dispositif selon la revendication 3, **caractérisé en ce que** chaque moyen de retenue latérale (18¹) s'étend de manière à recouvrir le bras (20¹) que ce moyen est destiné à retenir.

5. Dispositif (2) selon l'une quelconque des revendications précédentes, **caractérisé en ce que** le berceau (20) comprend une base (20³) reliant les deux bras (20¹), ladite base (20³) comprenant des moyens de positionnement (20⁴) et/ou de fixation (24) sur une platine (12), préférentiellement métallique, du support.

6. Dispositif (2) selon l'une quelconque des revendications précédentes, **caractérisé en ce que** le (6) ou chacun des modules comprend au moins une source lumineuse reliée thermiquement au dissipateur thermique dudit module.

7. Dispositif (2) selon la revendication 6, **caractérisé en ce que** le (6) ou chacun des modules comprenant une source lumineuse, comprend des moyens optiques (16) aptes à dévier les rayons lumineux de la ou des sources lumineuses en vue de former un faisceau lumineux suivant un axe optique du module.

8. Dispositif (2) selon revendication 7, **caractérisé en ce que**, le ou chacun des modules comprenant au moins une source lumineuse et des moyens optiques pour former ledit faisceau lumineux, la ou les sources lumineuses, le dissipateur thermique (14) et les moyens optiques (16) du module (6) forment un ensemble rigide apte à pivoter par rapport au support (12, 20).

9. Dispositif selon l'une quelconque des revendications 1 à 8, **caractérisé en ce que** les modules (6, 8, 10) sont au moins au nombre de deux et sont des modules d'éclairage, un premier desdits modules étant monté de manière non pivotante sur le support, au moins un deuxième desdits modules étant montés pivotants, le premier module étant apte à produire un premier faisceau, notamment à coupure droite ou sans coupure, le deuxième module étant apte à produire un deuxième faisceau d'éclairage, notamment à coupure avec un ressaut, et **en ce que** le dispositif est capable de produire une fonction d'éclairage, notamment de type route ou code, par superposition des premier et deuxième faisceaux.

## Patentansprüche

1. Beleuchtungs- und/oder Lichtsignalvorrichtung (2) für ein Kraftfahrzeug, umfassend:
- mindestens ein Lichtmodul, das geeignet ist, einen Lichtstrahl (6, 8, 10) auszusenden und eine Wärmesenke (14) aufweist, und
- einen Träger (12, 20),
**dadurch gekennzeichnet, dass**
das oder jedes der Module (6) über seine Wärmesenke (14) schwenkbar an dem Träger (12, 20) angebracht ist,
dadurch, dass der Träger ein Traggestell (20) aufweist, auf dem die Wärmesenke (14) des oder jedes der Module (6) schwenkbar angebracht ist, wobei das Traggestell vorzugsweise aus elektrisch isolierendem Material besteht,
dadurch, dass das Traggestell (20) zwei Arme (20¹) bildet, die sich seitlich auf beiden Seiten des Kühlkörpers (14) erstreckt,
dadurch, dass die Wärmesenke (14) des oder jedes der Module (6) auf jeder Seite einen Zapfen (14¹) aufweist, der mit einem der Arme (20¹) zusammenwirkt,
dadurch, dass mindestens einer, insbesondere jeder, der zwei Arme (20¹) Führungsflächen (20²) des entsprechenden Zapfens (14¹) der Wärmesenke (14) zum Positionieren des oder jedes der Module (6) in Bezug auf das Traggestell (20) aufweist,
dadurch, dass das oder jedes der Module (6) Mittel zum seitlichen Halten (18¹) der Arme (20¹) in Bezug auf das Modul (6) aufweist,
und dadurch, dass das oder jedes der Module eine Maske (18) aufweist, die die Mittel zum seitlichen Halten (181) aufweist, wobei die Mittel vorzugsweise Halteflächen der Arme auf der Maske (18) bilden.

2. Vorrichtung (2) nach Anspruch 1, **dadurch gekennzeichnet, dass** das oder jedes der Module (6) eine optische Achse aufweist und entlang einer Querachse, vorzugsweise senkrecht, zu der optischen Achse des Moduls schwenkbar ist.

3. Vorrichtung nach einem der Ansprüche 1 oder 2, **dadurch gekennzeichnet, dass** die Maske einen ästhetischen Abschnitt aufweist, der mindestens zum Verdecken der Wärmesenke bestimmt ist, wobei sich die Mittel zum seitlichen Halten (18¹) beiderseits der Maske von dem ästhetischen Abschnitt parallel zu den Armen des Traggestells erstrecken.

4. Vorrichtung nach Anspruch 3, **dadurch gekennzeichnet, dass** sich jedes Mittel zum seitlichen Halten (18¹) derart erstreckt, um den Arm (20¹) zu bedecken, den dieses Mittel halten soll.

5. Vorrichtung (2) nach einem der vorhergehenden Ansprüche, **dadurch gekennzeichnet, dass** das Traggestell (20) eine Basis (20³) aufweist, die die zwei Arme (20¹) verbindet, wobei die Basis (20³) Mittel zum Positionieren (20⁴) und/oder zum Befestigen (24) des Trägers auf einer Platte (12), vorzugsweise aus Metall, aufweist.

6. Vorrichtung (2) nach einem der vorhergehenden Ansprüche, **dadurch gekennzeichnet, dass** das (6) oder jedes der Module mindestens eine Lichtquelle aufweist, die mit der Wärmesenke des Moduls thermisch verbunden ist.

7. Vorrichtung (2) nach Anspruch 6, **dadurch gekennzeichnet, dass** das (6) oder jedes der Module, das eine Lichtquelle aufweist, optische Mittel (16) aufweist, die geeignet sind, die Lichtstrahlen der Lichtquelle oder der Lichtquellen umzuleiten, um einen Lichtstrahl entlang einer optischen Achse des Moduls zu bilden.

8. Vorrichtung (2) nach Anspruch 7, **dadurch gekennzeichnet, dass**, nachdem das oder jedes der Module eine Lichtquelle und optische Mittel aufweist, um den Lichtstrahl zu bilden, die Lichtquelle oder die Lichtquellen, die Wärmesenke (14) und die optischen Mittel (16) des Moduls (6) eine starre Anordnung bilden, die in Bezug auf den Träger (12, 20) schwenkbar ist.

9. Vorrichtung nach einem der Ansprüche 1 bis 8, **dadurch gekennzeichnet, dass** die Module (6, 8, 10) mindestens zwei an der Zahl sind und Beleuchtungsmodule sind, wobei ein erstes der Module nicht schwenkbar auf dem Träger angebracht ist, wobei mindestens ein zweites der Module schwenkbar angebracht ist, wobei das erste Module geeignet ist, einen ersten Strahl zu erzeugen, insbesondere mit gerader Unterbrechung oder ohne Unterbrechung, wobei das zweite Modul geeignet ist, einen zweiten Beleuchtungsstrahl zu erzeugen, insbesondere mit Unterbrechung mit einem Sprung, und dadurch, dass die Vorrichtung in der Lage ist, eine Beleuchtungsfunktion, insbesondere des Typs des Fern- oder Abblendlichts, durch Überlagern des ersten und zweiten Strahls zu erzeugen.

## Claims

1. Lighting and/or signalling lighting device (2) for motor vehicles, including:
- at least one lighting module adapted to emit a light beam (6, 8, 10) and including a heatsink (14); and
- a support (12, 20);
**characterized in that**
the or each module (6) is mounted to pivot on the support (12, 20) via its heatsink (14),
**in that** the support includes a cradle (20) on which the heatsink (14) of the or each module (6) is pivotably mounted, said cradle preferably being made of electrically insulative material,
**in that** the cradle (20) forms two arms (20¹) extending laterally on either side of the heatsink (14),
**in that** the heatsink (14) of the or each module (6) includes laterally, on each side, a journal (14¹) cooperating with one of the arms (20¹),
**in that** at least one, notably each, of the two arms (20¹) includes surfaces (20²) for guiding the corresponding journal (14¹) of the heatsink (14) relative to the cradle (20) to fit the or each module (6),
**in that** the or each module (6) includes means (18¹) for lateral retention of the arms (20¹) relative to said module (6),
and **in that** the or each module includes a mask (18) including the lateral retaining means (181), said means preferably forming surfaces for retaining the arms on said mask (18).

2. Device (2) according to Claim 1, **characterized in that** the or each module (6) has an optical axis and pivots about an axis transverse, preferably perpendicular, to the optical axis of said module.

3. Device according to either one of Claims 1 and 2, **characterized in that** the mask includes an aesthetic portion intended at least to mask the heatsink, the lateral retaining means (18¹) extending on either side of the mask from the aesthetic portion parallel to the arms of the cradle.

4. Device according to Claim 3, **characterized in that** each of the lateral retaining means (18¹) extends so as to cover the arm (20¹) that these means are intended to retain.

5. Device (2) according to any one of the preceding claims, **characterized in that** the cradle (20) includes a base (20³) connecting the two arms (20¹), said base (20³) including means (20⁴) for positioning it on and/or means (24) for fixing it to a plate (12), preferably a metal plate, of the support.

6. Device (2) according to any one of the preceding claims, **characterized in that** the or each module (6) includes at least one light source thermally coupled to the heatsink of said module.

7. Device (2) according to Claim 6, **characterized in that** the or each module (6) including a light source includes optical means (16) adapted to deflect the light rays from the light source or sources to form a light beam along an optical axis of the module.

8. Device (2) according to Claim 7, **characterized in that**, the or each module including at least one light source and optical means for forming said light beam, the light source or sources, the heatsink (14) and the optical means (16) of the module (6) form a rigid assembly adapted to pivot relative to the support (12, 20) .

9. Device according to any one of Claims 1 to 8, **characterized in that** there are at least two modules (6, 8, 10) and they are lighting modules, a first of said modules being mounted in a non-pivotable manner on the support, at least a second one of said modules being mounted in a pivotable manner, the first module being adapted to produce a first beam, notably with right-hand cut-off or no cut-off, the second module being adapted to produce a second lighting beam, notably with a cut-off and an offset , and **in that** the device is capable of producing a lighting function, notably of low beam type, by superposition of the first and second beams.
